# EUROPEAN PATENT SPECIFICATION

(11) **EP 0 478 020 B1**
(45) Date of publication and mention of the grant of the patent: **25.09.1996**
(21) Application number: 91201630.0
(22) Date of filing: 26.06.1991
(51) Int. Cl.: A01D 34/74, A01D 34/84

(54) **Lawn mower with support roller and rear wheels ajustable in different cutting positions**
Rasenmäher mit in verschiedene Schnitthöhen verstellbare Stützroller und Hinterräder
Tondeuse à gazon avec rouleau et roues arrières réglables en différentes hauteurs de coupe

(30) Priority: 30.08.1990 IT 2134390
(43) Date of publication of application: 01.04.1992
(73) Proprietor: CASTELGARDEN S.P.A., I-31033 Castelfranco Veneto (Treviso ) (IT)
(72) Inventor: Ferrari, Maurizio, I-20141 Milano (IT)
(74) Representative: Mittler, Enrico

(56) References cited:
- EP-A- 0 304 903
- DE-U- 6 938 450
- FR-A- 2 451 700
- US-A- 2 909 884
- US-A- 3 755 998

## Description

The present invention relates to a lawn mower with support roller and rear wheels adjustable in different cutting positions.

Traditional lawn mowers provide for a supporting chassis for a cutting blade rotating in a horizontal plane, which moves on the ground by means of wheels. The distance of the cutting blade from the ground is normally adjustable by varying with known contrivances the position of the chassis with respect to the wheels.

The larger and heavier the lawn mowers become the greater is the weight bearing upon the wheels and the wheels will thus leave anti-aesthetic marks on the grass which are also harmful for the grass underneath.

For this reason, in some countries such as in England it is required that the weight of the lawn mower in its rear part be supported and distributed by a large support roller which distributes the weight over the entire cutting surface, avoiding anti-aesthetic wheel marks and thus determining an enhanced appearance of the mowed lawn.

The use of the above mentioned roller also allows the grass to be cut easily in the proximity of flowerbeds or edges, where the presence of channels or of other unevenness of the ground can determine the lowering of a rear wheel with the consequent unbalancing of the lawn mower, which can indeed be avoided thanks to the action of the supporting roller.

According to the known art lawn mowers with rear supporting rollers are of two types.

A first type of lawn mower has a supporting roller that can be adjusted in height in the different cutting heights, but with no rear wheels. This solution implies the construction of a very specific lawn mower, evidently different from ordinary four-wheel lawn mowers. This creates obvious problems in terms of industrial production, financial investment and processing of components.

A second type of lawn mower has both the supporting roller and the rear wheels. According to this solution the roller is positioned fixed with respect to the chassis so as to touch the ground in the lowest cutting position and is thus not adjustable with respect to the chassis itself in the different cutting heights as on the other hand are the wheels.

DE-U-6938450 discloses a lawn mower as defined in the preamble of claim 1.

The object of the present invention is to provide a lawn mower having both rear wheels and a supporting roller, wherein the latter is also adjustable in height with respect to the chassis in the latter's different cutting heights.

A further object of the present invention is to provide a lawn mower wherein the supporting roller and its support unit can be provided as an optional, while the fundamental components of the lawn mower, such as chassis, wheels, cutting unit, cutting height adjustment unit and traction unit, if any, are provided as common components.

According to the invention such objects are attained by a lawn mower as defined in claim 1.

In this way a lawn mower has been provided wherein there are simultaneously present supporting roller and rear wheels and wherein the roller, as well as the rear wheels, can be adjusted in height with respect to the chassis in the latter's different cutting heights.

In addition the presence of roller supports movably mounted on the chassis allows the roller and its supports to be supplied as an optional, while the fundamental components of the lawn mower, such as chassis, wheels, cutting unit, cutting height adjustment unit and traction unit, if any, are provided as common components.

Such a lawn mower can be both of the type that has to be pushed and that of the traction type with rear driving wheels.

In the latter case the supporting roller is not mounted directly on its supports, but it is on the other hand supported by a pair of levers rotatably held by the supports and elastically urged towards a position of forced resting of the roller on the ground.

In this way a lawn mower is accomplished suitable for operating in an optimum manner not only when it is being pushed, but also under traction.

In the case wherein such a lawn mower operates while being pushed, the supporting roller is in fact integral with the supports and any obstacle along the run can be overcome by pushing the lawn mower a little harder.

In the case wherein the lawn mower operates in traction, that is with rear driving wheels, any obstacle along the run shall, on the other hand, cause the supporting roller to rise with respect to its supports exploiting the suspension system with levers and springs of the roller itself, while the wheels shall remain on the ground and shall keep the lawn mower in traction.

The features of the present invention shall be made more evident by an embodiment illustrated as a non-limiting example in the enclosed drawings, wherein:
Fig. 1 illustrates a perspective view of a traction lawn mower according to the invention;

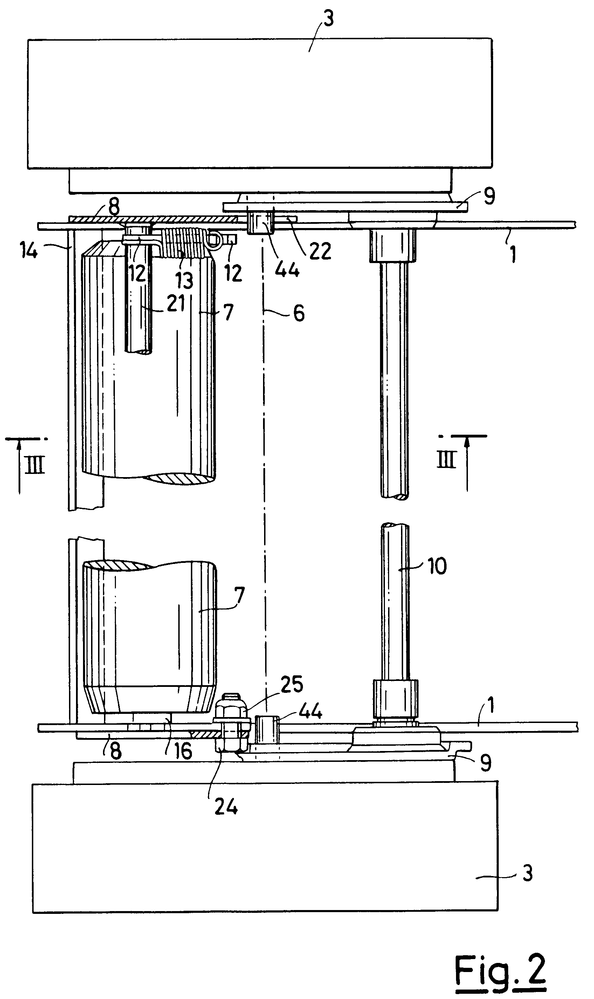

Fig. 2 shows the rear part of the above mentioned lawn mower in a partially sectioned top plan view;
Fig. 3 is a cross-sectional view taken along the line III-III of Fig. 2;

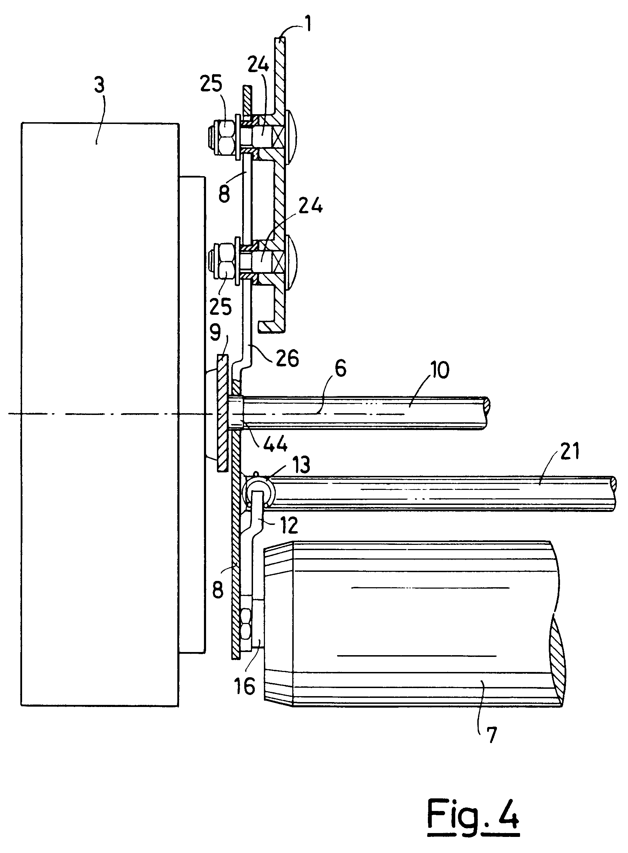

Fig. 4 is a cross-sectional view taken along the line IV-IV of Fig. 3.

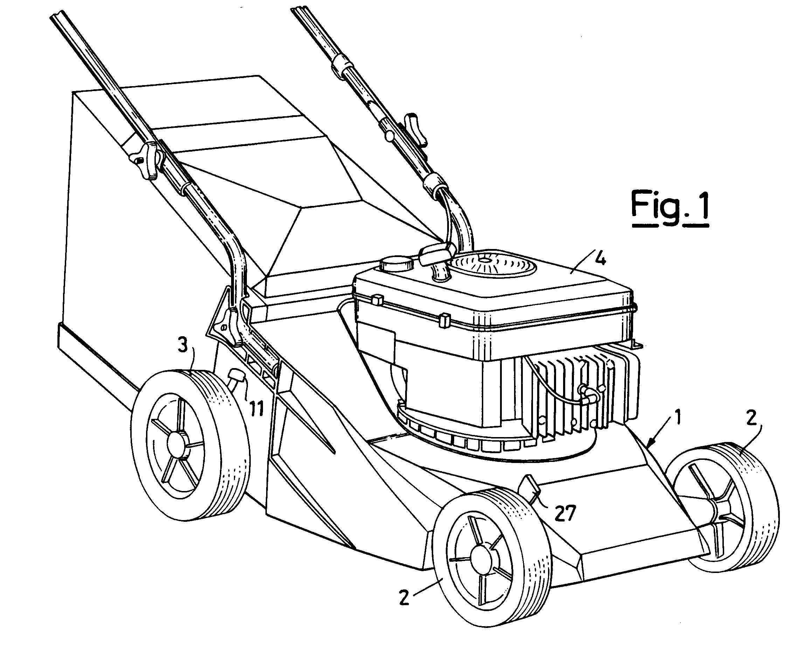

With reference to Fig. 1, there is shown therein a traction lawn mower which comprises a chassis 1 on a pair of front wheels 2 and on a pair of rear wheels 3 which in the specific case work as driving wheels. In the chassis 1 there is a space for housing and fastening an engine 4.

With reference to Fig.s 2 - 4, the chassis 1 is suitable for supporting a cutting blade, not shown, rotating in a horizontal plane and is in turn supported and driven by a pair of rear wheels 3 through a pair of coaxial horizontal pins 44 which define a horizontal axis of rotation 6. The rear wheels 3 receive motion from the engine 4 by means of a transmission system known in itself (not shown).

The axis of rotation 6 is held by a pair of brackets 9 used to adjust the height of the chassis 1 with respect to the wheels 3. Such brackets 9 are mounted on a connecting pin 10 rotatably held by the chassis 1 and can be operated to rotate in a succession of pre-set positions by means of a lever 11 located in the proximity of the rear wheels 3.

Between the rear wheels 3 there is interposed a supporting roller 7, whose axis of rotation 16 is parallel to the axis of rotation 6 of the rear wheels 3. The roller 7 is rotatably held by a pair of supports 8 rigidly connected together by a cylindrical bar 21 and by a cleaning beam 14 and movably connected to the axis of rotation 6 of the rear wheels 3 by the sliding insertion of the axis of rotation 6 in horizontal slots 22 of the supports 8. More accurately, the roller 7, in the illustrated case of a traction lawn mower, has its axis 16 held by an extremity of bell cranks 12 whose central part is hinged at 23 on the supports 8 and the other extremity hooked to the small bar 21 through elastic means 13 suitable for allowing the elastic oscillation of the roller 7 with respect to the supports 8 to follow the variations in the level of the ground. The supports 8 are in turn movably mounted on the chassis 1 by means of the engagement of screws 24 with nuts 25 fixed to the chassis 1 and slidably inserted in oblique slots 26 of the supports 8.

With reference to the mentioned figures, the lawn mower operates as follows.

Before the actual start-up of the lawn mower, which is accomplished in a manner known in itself through the motor 4, the height of the roller 7 and of the rear wheels 3 is adjusted with respect to the chassis 1.

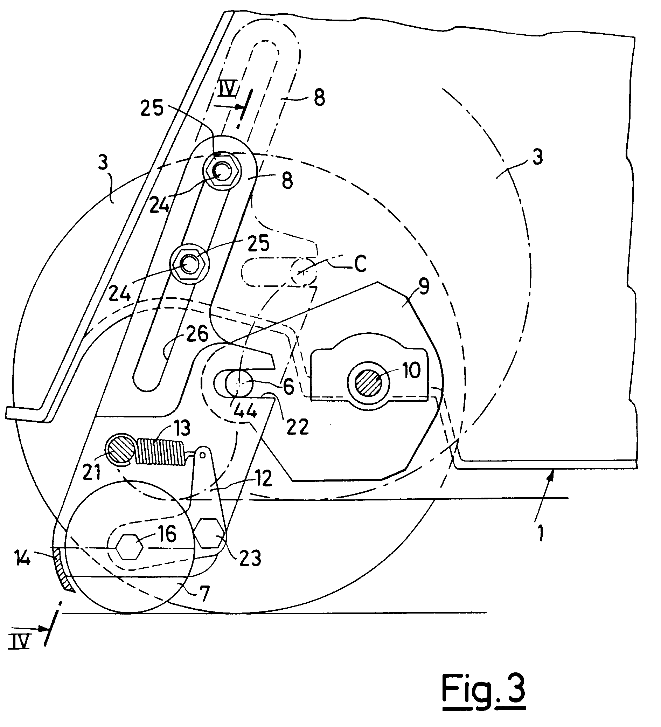

More accurately, through the lever 11 located in the proximity of the rear wheels the rotation is operated of the brackets 9 on the connecting pin 10 and the consequent displacement of the axis of rotation 6 of the rear wheels 3 along an arc of a circumference indicated in Fig. 3 with C. During its displacement the axis of rotation 6, due to its sliding engagement in the slots 22 and thanks to the sliding engagement of the screws 24 in the oblique slots 26, cause the pair of supports 8 and thus the roller 7 rotatably held by them through the levers 12 to move along a rectilinear path defined by the slots 26. In this way the roller 7 and the rear wheels 3 are positioned at the desired height with respect to the chassis 1. A similar adjustment may be made for the front wheels 2 through a similar lever 27 (Fig.1).

It is now possible to proceed with starting up the lawn mower.

In the case wherein the lawn mower operates under traction the presence of the levers 12 with their elastic means 13 allows the absorption of any possible variations in the level of the ground permitting the roller 7, during the run, to oscillate with respect to the supports 8, leaving the rear driving wheels 3 always in contact with the ground. The elastic means 13 also have the function of determining a desired load of the roller 7 on the ground.

In the case wherein the invention is used for a lawn mower operated by pushing, the structure remains the same as that of the traction lawn mower, with the exclusion of the levers 12 and of the elastic reaction means 13, so that the roller 7 is held directly by the supports 8. Any differences in the level of the ground are then tackled by pushing the lawn mower a little harder.

## Claims

1. Lawn mower comprising a chassis (1) supporting a cutting blade rotating in a horizontal plane, two horizontal-axis rear wheels (3) and two front wheels for supporting and moving said chassis (1), a freely-rotating support roller (7) interposed between said rear wheels (3) with its axis of rotation (16) parallel to the axis of rotation (6) of said rear wheels (3) and adjustment means (11) for adjusting the height of the chassis (1) with respect to the wheels (2, 3), said adjustment means (11) acting on brackets (9) which support the axis of rotation (6) of said rear wheels (3) and are mounted on a connecting pin (10) rotatably supported by the chassis (1) parallely to said axis of rotation (6), and said supporting roller (7) being rotatably held by a pair of supports (8), characterized in that said pair of supports (8) are rigidly connected together and have horizontal slots (22), into which a pair of coaxial horizontal pins (44) defining said axis of rotation (6) of the rear wheels (3) are slidingly received, said supports (8) being also movably mounted on said chassis (1) so that they can be displaced with respect to said chassis (1) along a rectilinear path defined by slide guides (26) and concurrently move said axis of rotation (6) of the rear wheels (3) about said connecting pin (10).

2. Lawn mower according to claim 1, characterized in that said supporting roller (7) is held by a pair of levers (12) rotatably held by the supports (8) and elastically urged towards a position of forced resting of the roller (7) on the ground.

## Patentansprüche

1. Rasenmäher mit einem Chassis (1), das eine sich in einer horizontalen Ebene drehende Schneideklinge trägt, zwei Hinterrädern (3) mit horizontaler Achse und zwei Vorderrädern zum Tragen und Bewegen des Chassis (1), einer frei drehenden Stützrolle (7), die zwischen die Hinterräder (3) eingesetzt ist, wobei sich ihre Rotationsachse (16) parallel zu der Rotationsachse (6) der Hinterräder (3) erstreckt, und einem Einstellmittel (11) zum Einstellen der Höhe des Chassis (1) in Bezug auf die Räder (2, 3), wobei das Einstellmittel (11) auf Träger (9) wirkt, die die Rotationsachse (6) der Hinterräder (3) tragen und auf einem Verbindungsbolzen (10) angebracht sind, der drehbar von dem Chassis (1) parallel zu der Rotationsachse (6) gelagert ist, und die Stützrolle (7) drehbar von einem Paar von Stützen (8) gehalten wird,
dadurch gekennzeichnet, daß das Paar von Stützen (8) starr miteinander verbunden ist und horizontale Schlitze (22) aufweist, in denen gleitend ein Paar von koaxialen horizontalen Zapfen (44), die die Rotationsachse (6) der Hinterräder (3) definieren, aufgenommen ist, wobei die Stützen (8) ebenfalls bewegbar an dem Chassis (1) so angebracht sind, daß sie in Bezug auf das Chassis (1) entlang eines geradlinigen Weges, der durch Gleitführungen (26) definiert ist, versetzt werden können und gleichzeitig damit die Rotationsachse (6) der Hinterräder (3) um den Verbindungsbolzen (10) bewegen.

2. Rasenmäher nach Anspruch 1, dadurch gekennzeichnet, daß die Stützrolle (7) durch ein Paar von Hebeln (12) gehalten wird, die drehbar von den Stützen (8) gehalten werden und elastisch zu einer Position gedrückt werden, in der die Rolle (7) auf dem Boden mit Kraft ruht.

## Revendications

1. Tondeuse à gazon, comprenant un châssis (1) qui supporte une lame de coupe tournant dans un plan horizontal, deux roues arrière (3) à axe horizontal et deux roues avant de support et de déplacement du châssis (1), un rouleau (7) de support qui peut tourner librement et qui est placé entre les roues arrière (3), son axe de rotation (16) étant parallèle à l'axe de rotation (6) des roues arrière (3), et un dispositif (11) d'ajustement de la hauteur du châssis (1) par rapport aux roues (2, 3), le dispositif d'ajustement (11) agissant sur des équerres (9) qui supportent l'axe de rotation (6) des roues arrière (3) et qui sont montées sur une broche (10) de raccordement supportée par le châssis (1) afin qu'elle puisse tourner parallèlement à l'axe de rotation (6), le rouleau de support (7) étant supporté de manière qu'il puisse tourner par deux supports (8), caractérisée en ce que les deux supports (8) sont raccordés rigidement l'un à l'autre et ont des fentes horizontales (22) dans lesquelles peuvent coulisser deux broches coaxiales horizontales (44) délimitant l'axe de rotation (6) des roues arrière (3), les supports (8) étant aussi montés sur le châssis (1) de manière qu'ils soient mobiles et puissent être déplacés par rapport au châssis (1) suivant un trajet rectiligne délimité par des guides (26) de coulissement et qu'ils déplacent simultanément l'axe de rotation (6) des roues arrière (3) autour de la broche de raccordement (10).

2. Tondeuse à gazon selon la revendication 1, caractérisée en ce que le rouleau de support (7) est maintenu par deux leviers (12) eux-mêmes portés par les supports (8) afin qu'ils puissent tourner et rappelés élastiquement vers une position d'appui forcé du rouleau (7) sur le sol.
